# EUROPEAN PATENT APPLICATION

(11) **EP 2 677 815 A1**
(43) Date of publication of application: **25.12.2013**
(21) Application number: 12760939.4
(22) Date of filing: 22.03.2012
(51) Int. Cl.: H04W 48/18

(54) **SERVICE ESTABLISHMENT METHOD, DEVICE AND SYSTEM**

(30) Priority: 22.03.2011 CN 201110069649
(71) Applicant: Huawei Technologies Co., Ltd., Shenzhen, Guangdong 518129 (CN)
(72) Inventor: ZHAO, Yang, Shenzhen, Guangdong 518129 (CN); QIN, Jun, Shenzhen, Guangdong 518129 (CN)
(74) Representative: Pfenning, Meinig & Partner GbR
(86) International application number: PCT/CN2012/072814
(87) International publication number: WO 2012/126383

(57) **Abstract**

The present invention discloses a service establishment method, device, and system, relating to the field of communications. The method includes: receiving a service indication message, where the service indication message includes service support information about a service initiated by a terminal; and when it is determined on the basis of the service support information that a network format opened by a cell in which the terminal initiates the service does not support the service initiated by the terminal, switching the service initiated by the terminal to a cell that supports the service initiated by the terminal. The device includes: a receiving module and a switching module. The system includes: a core network element and a service establishment device. In the present invention, when a terminal initiates in a cell of an opened network format a service that is not supported by the currently opened network format, the service initiated by the terminal can be established successfully, and the user experience can be improved.

## Description

This application claims priority to Chinese Patent Application No. 201110069649.5, filed with the Chinese Patent Office on March 22, 2011, and entitled "SERVICE ESTABLISHMENT METHOD, DEVICE, AND SYSTEM", which is incorporated herein by reference in its entirety.

### TECHNICAL FIELD

The present invention relates to the field of communications, and in particular, to a service establishment method, device, and system.

### BACKGROUND

As global warming deteriorates, energy saving has become a practical pursuit of carriers. In order to reduce operation cost and protect environment, many energy saving measures will be applied to communication networks. Especially in a situation where a plurality of network formats coexists, how to utilize different network formats to provide services in a more economic way is a hotspot widely discussed in the industry.

When a plurality of network formats is in overlapping coverage, the objective of energy saving may be achieved in certain conditions by opening cells of some network formats while closing cells of other network formats. For example, when a GSM (Global System for Mobile communications, Global System for Mobile Communications) network and a UMTS (Universal Mobile Telecommunications System, Universal Mobile Telecommunications System) network are in overlapping coverage, during low traffic hours at night, GSM network cells may be opened while the remaining UMTS network cells are closed.

The inventors find that the prior art at least has the following problems:

If cells of some network formats are opened while cells of other network formats are closed, a mobile station can only camp on the cells of the currently opened network format; if the currently opened network format does not support a service initiated by the mobile station, the service initiated by the mobile station fails to be established, thereby affecting user experience.

### SUMMARY

In order to successfully establish, when a terminal initiates in a cell of an opened network format a service not supported by the currently opened network format, the service initiated by the terminal and improve user experience, the present invention provides a service establishment method, device, and system. The technical solutions are as follows:
A service establishment method includes:
   receiving a service indication message, where the service indication message includes service support information about a service initiated by a terminal; and
   when it is determined on the basis of the service support information that a network format opened by a cell in which the terminal initiates the service does not support the service initiated by the terminal,
   switching the service initiated by the terminal to a cell that supports the service initiated by the terminal.
A service establishment method includes:
   receiving a service request message sent by a terminal, where the service request message includes a type of a service initiated by the terminal; and
   sending, according to the type of the service initiated by the terminal, assignment request information to a base station controller, where the assignment request information includes service support information of the service initiated by the terminal, so that the base station controller switches, according to the service support information, the service initiated by the terminal to a cell that supports the service initiated by the terminal.
A service establishment method includes:
   sending, when initiating a service in a Global System for Mobile Communications GSM network cell by means of packet switched PS domain request, a packet resource request carrying a type of the service to a base station controller BSC, so that the BSC switches, according to the type of the service, the service to a cell that supports the service.
A service establishment device includes:
   a receiving module, configured to receive a service indication message, where the service indication message includes service support information about a service initiated by a terminal; and
   a switching module, configured to switch, when it is determined on the basis of the service support information that a network format opened by a cell in which the terminal initiates the service does not support the service initiated by the terminal, the service initiated by the terminal to a cell that supports the service initiated by the terminal.

A core network element includes:
a receiving module, configured to receive a service request message sent by a terminal, where the service request message includes a type of a service initiated by the terminal; and
a sending module, configured to send, according to the type of the service initiated by the terminal, assignment request information to a base station controller, where the assignment request information includes service support information of the service initiated by the terminal, so that the base station controller switches, according to the service support information, the service initiated by the terminal to a cell that supports the service initiated by the terminal.

A terminal includes:
a sending module, configured to send, when a service is initiated in a Global System for Mobile Communications GSM network cell by means of packet switched PS domain request, a packet resource request carrying a type of the service to a base station controller BSC, so that the BSC switches, according to the type of the service, the service to a cell that supports the service.

A service establishment system includes the core network element and the service establishment device.

In the present invention, when a terminal initiates in a cell that it currently camps on a service not supported by a currently opened network format, the service initiated by the terminal is switched to a cell that supports the service initiated by the terminal. In this way, when the terminal initiates in the cell that it currently camps on the service not supported by the currently opened network format, the service initiated by the terminal can be established successfully, thereby improving user experience.

### BRIEF DESCRIPTION OF DRAWINGS

FIG. 1 is a flowchart of a service establishment method according to Embodiment 1 of the present invention;
FIG. 2 is a flowchart of a service establishment method according to Embodiment 2 of the present invention;
FIG. 3 is a flowchart of a service establishment method according to Embodiment 3 of the present invention;
FIG. 4 is a flowchart of a service establishment method according to Embodiment 4 of the present invention;
FIG. 5 is a flowchart of a service establishment device according to Embodiment 5 of the present invention;
FIG. 6 is a schematic diagram of a core network element according to Embodiment 6 of the present invention;
FIG. 7 is a schematic diagram of a terminal according to Embodiment 7 of the present invention; and
FIG. 8 is a schematic diagram of a service establishment system according to Embodiment 8 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

The current communication network has overlapping coverage of different network formats, which can be handled, when there is less load in the communication network, by opening cells of some network formats and closing or partly closing cells of other network formats to achieve the objective of energy saving. An MS (Mobile Station, mobile station) camps on a cell of a currently opened network format and initiates a service in the cell that it currently camps on. When the service initiated by the MS is not supported or not fully supported by the currently opened network format, the method provided in the present invention may be used to establish the service initiated by the MS.

A normally opened cell will broadcast a system message periodically utilizing a common broadcast channel; cell closing refers to closing the common broadcast channel of the cell to stop the cell from broadcasting the system message, but a resource service channel except the system message is open; cell part closing refers to prolonging a period that the cell broadcasts the system message, but still opening the common broadcast channel of the cell, thereby achieving the objective of energy saving. In addition, opening the cell is opening the common broadcast channel of the cell, and the common broadcast channel includes a pilot channel and a synchronous measurement channel.

### Embodiment 1

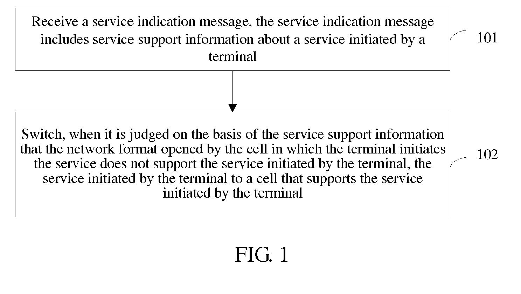

An embodiment of the present invention provides a service establishment method. In a communication network having a plurality network formats in overlapping coverage, cells of part of network formats are opened and cells of other network formats are closed or part closed. Referring to FIG. 1, the method includes:
101: Receive, by a base station controller, a service indication message, where the service indication message includes service support information about a service initiated by a terminal.
102: Switch, by a base station controller, when it is determined on the basis of the service support information that a network format opened by a cell in which the terminal initiates the service does not support the service initiated by the terminal, the service initiated by the terminal to a cell that supports the service initiated by the terminal.

If the service support information indicates a service type of the service initiated by the terminal, step 102 may be specifically that: determining, according to the service type indicated by the service support information and a mapping relationship between the service type and a network format, a network format that supports the service initiated by the terminal, and switching the service initiated by the terminal to a cell corresponding to the network format.

The service indication message includes: an assignment request message sent by a core network, or, a packet resource request sent by the terminal.

When the service indication message is the assignment request message sent by the core network,
if the service support information indicates that a current network does not support the service initiated by the terminal, the switching the service initiated by the terminal to the cell that supports the service initiated by the terminal is specifically:
determining the network format that supports the service initiated by the terminal, and switching the service initiated by the terminal to the cell corresponding to the determined network format; or
if the service support information indicates the network format that supports the service initiated by the terminal, the switching the service initiated by the terminal to the cell that supports the service initiated by the terminal is specifically:
   switching the service initiated by the terminal to the cell corresponding to the network format indicated by the service support information.

If the network format that supports the service initiated by the terminal has a neighboring cell co-site with the cell that the terminal camps on, the switching the service initiated by the terminal to the cell of the network format is specifically:
switching the service initiated by the terminal to the cell corresponding to the network format in the neighboring cell co-site with the cell that the terminal camps on, where the co-site neighboring cell refers to a neighboring cell with its receiver deployed in the same position with a receiver of the cell that the terminal camps on, and with its transmitter also deployed in the same position with a transmitter of the cell that the terminal camps on.

Specifically, the base station controller may receive the assignment request message sent by a core network element (such as an MSC) or the packet resource request sent by the terminal. The assignment request message or the packet resource request includes the service support information. If the service support information indicates the service type of the service initiated by the terminal, the base station controller determines, according to the service type indicated by the service support information and the mapping relationship between the service type and the network format, the network format that supports the service initiated by the terminal, and switches the service initiated by the terminal to the cell corresponding to the network format.

When the service indication message is the assignment request message sent by the core network,
if the service support information indicates that the current network does not support the service initiated by the terminal, the base station controller may first determine the network format that supports the service initiated by the terminal, and then switch the service initiated by the terminal to the cell corresponding to the determined network format; or
if the service support information indicates the network format that supports the service initiated by the terminal, the base station controller switches the service initiated by the terminal to the cell corresponding to the network format indicated by the service support information. In the embodiment of the present invention, when a mobile station initiates in a cell that it currently camps on a service not supported by a currently opened network format, the service initiated by the terminal is switched to a cell that supports the service initiated by the terminal. In this way, when the mobile station initiates in the cell that it currently camps on the service not supported by the currently opened network format, the service initiated by the mobile station can be established successfully, thereby improving user experience.

### Embodiment 2

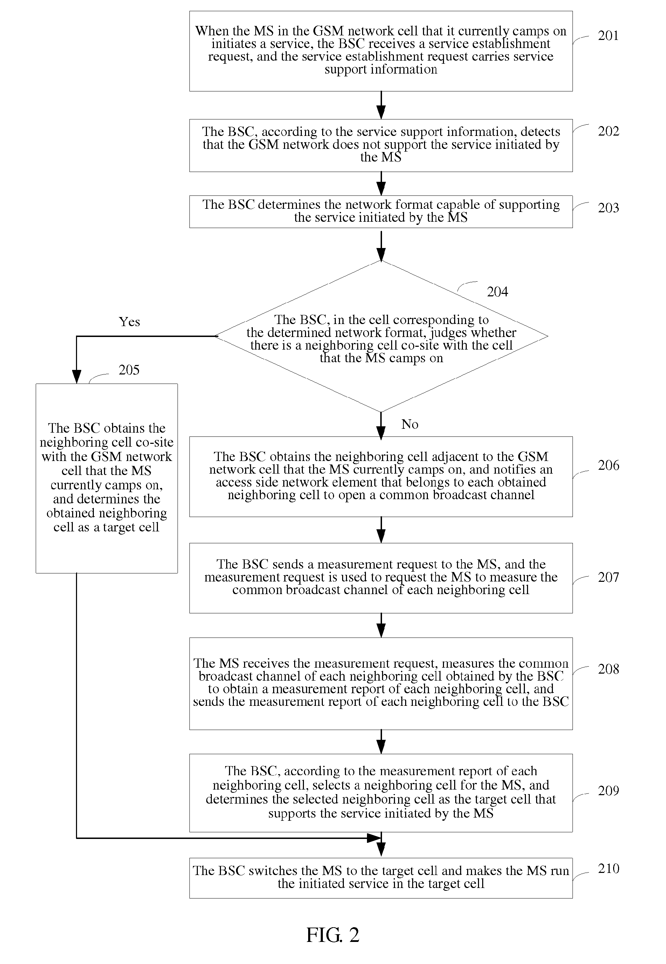

An embodiment of the present invention provides a service establishment method. In the embodiment, an MS is located in an overlapping coverage area of a GSM network, a UMTS network, and an LTE (Long Term Evolution, Long Term Evolution) network. The GSM network cell is in open state, and the UMTS network cell and the LTE network cell are in closed or part closed state. Referring to FIG. 2, the method includes:
201: Receive, by a BSC (Base Station Controller, base station controller), when an MS in a GSM network cell that it currently camps on initiates a service, a service indication message, where the service indication message includes service support information of the service initiated by the MS.

The service support information may indicate that a GSM network does not support the service initiated by the MS, indicate a network format that supports the service initiated by the MS, or indicate a service type of the service initiated by the MS.

The service indication message may be an assignment request message sent by a core network element, and the assignment request message may carry the service support information for indicating whether the GSM network supports the service initiated by the MS; the core network element may be an MSC; or,
the service indication message may be a packet resource request sent by the MS, and the packet resource request carries the service support information for indicating resource that the MS needs for initiating the service.

The MS camps on a cell with the GSM network currently opened, while the UMTS network cell and LTE network cell are closed or part closed, meanwhile, the MS camps on the GSM network cell. Therefore, the MS can initiate a service only in the GSM network cell.

In the embodiment, the MS is a multi-mode terminal, namely, the MS may be a dual-mode terminal for GSM and UMTS, or a dual-mode for GSM and LTE, or a triple-mode terminal for GSM, UMTS, and LTE. Therefore, the MS may initiate, in a GSM network cell, various services, which may be supported by the GSM network, or not supported by the GSM network but supported by the UMTS network and/or the LTE network.

202: Detect, by the BSC according to the service support information, that the GSM network does not support the service initiated by the MS, and execute 203.

Specifically, if the service support information indicates that the GSM network does not support the service initiated by the MS, directly determine, according to the service indication information, that the GSM network does not support the service initiated by the MS;
if the service support information indicates the network format that supports the service initiated by the MS, determine whether the GSM network is the network format indicated by the service support information, and if not, determine that the GSM network does not support the service initiated by the MS; or
if the service support information indicates the service type of the service initiated by the MS, obtain, on the basis of the service type indicated by the service support information and from the mapping relationship between the stored service type and the network format, the network format that supports the service initiated by the MS; if the obtained network format is not the GSM network, determine that the GSM network does not support the service initiated by the MS.

For example, the MS initiates a video service in the GSM network cell. Since the GSM network does not support the video service, but both the UMTS network and the LTE network support the video service, in this case, the BSC detects that the GSM network does not support the video service initiated by the MS.

203: Determine, by the BSC, the network format capable of supporting the service initiated by the MS.

Specifically, if the service support information indicates that the GSM network does not support the service initiated by the MS, the BSC selects a network format from other network formats except GSM, and determines the selected network format as the network format that supports the service initiated by the MS; or,
if the service support information indicates the network format that supports the service initiated by the MS, the BSC may determine the network format indicated by the service support information as the network format that supports the service initiated by the MS; or,
if the service support information indicates the service type of the service initiated by the MS, obtain, on the basis of the service type indicated by the service support information and from the mapping relationship between the stored service type and the network format, the network format that supports the service initiated by the MS.

If there is a plurality of network formats that supports the service initiated by the MS, select a network format that optimally supports the service initiated by the MS.

204: Determine, by the BSC in the cell corresponding to the determined network format, whether there is a neighboring cell co-site with the cell that the MS currently camps on, and if yes, execute step 205; if no, execute step 206.

The co-site neighboring cell refers to a neighboring cell with its receiver deployed in the same position with a receiver of the cell that the terminal camps on, and with its transmitter also deployed in the same position with a transmitter of the cell that the terminal camps on.

205: Obtain, by the BSC, the neighboring cell co-site with the GSM network cell that the MS currently camps on, select from the obtained neighboring cell a cell corresponding to the determined network format, determine the selected cell as a target cell capable of supporting the service initiated by the MS, and then execute step 210.

206: Obtain, by the BSC, a neighboring cell adjacent to the GSM network cell that the MS currently camps on, select from the obtained neighboring cell the cell corresponding to the determined network format, and notify an access side network element that belongs to each selected neighboring cell to open a common broadcast channel.

207: Send, by the BSC, a measurement request to the MS, where the measurement request is used to request the MS to measure the common broadcast channel of each selected neighboring cell.

208: Receive, by the MS, the measurement request, measure each neighboring cell selected by the BSC and obtain a measurement report of each neighboring cell, and send the measurement report of each neighboring cell to the BSC.

209: Select, by the BSC according to the measurement report of each selected neighboring cell, a neighboring cell for the MS, and determine the selected neighboring cell as the target cell that supports the service initiated by the MS.

Further, the BSC may further notify an access side network element that belongs to an unselected neighboring cell to close the common broadcast channel.

Further, since the MS, when initiating a service, will periodically measure the common broadcast channel of the neighboring cell adjacent to the cell that the MS currently camps on, in the embodiment, the BSC, after notifying the access side network element that belongs to the neighboring cell to open the common broadcast channel, may not send the measurement request to the MS, and instead waits for the measurement report of each neighboring cell that is sent by the MS after periodically measuring the common broadcast channel of each neighboring cell, and then selects the target cell according to the measurement report of each neighboring cell.

210: Switch, by the BSC, the MS to the target cell and make the MS run the initiated service in the target cell.

Cell closing refers to closing the common broadcast channel of the cell, while the resource outside the cell is retained. Therefore, in the embodiment, the BSC, before switching the MS to the target cell, may not open the common broadcast channel of the target cell, and instead directly utilizes the resource retained by the target cell to establish a service channel, and via the established service channel, makes the MS run the initiated service on the established service channel.

In addition, in the embodiment, the BSC, before switching the MS to the target cell, may first open the common broadcast channel of the target cell, and then switch the MS to the target cell and make the MS run the initiated service in the target cell.

In the embodiment, the BSC may also first obtain a neighboring cell co-site with the cell that the MS currently camps on. If the obtained co-site neighboring cell has a neighboring cell corresponding to the network format that supports the service initiated by the MS, determine the neighboring cell corresponding to the network format that supports the service initiated by the MS as the target cell; otherwise, obtain a neighboring cell adjacent to the cell that the MS currently camps on, and select from the obtained neighboring cell a neighboring cell corresponding to the network format that supports the service initiated by the MS as the target cell.

In the embodiment, the BSC, after determining the network format that supports the service initiated by the MS, may obtain, on the basis of the cell that the MS currently camps on and from the mapping relationship between the stored camp-on cell and candidate cell, a corresponding candidate cell, and select, from the obtained candidate cell a candidate cell corresponding to the determined network format as the target cell.

In the embodiment, it is further feasible to retain and open the UMTS network cell, close or part close the GSM network cell and/or LTE network cell. When the MS initiates in the opened UMTS network cell a service not supported by the UMTS network, the foregoing method may be used to establish the service initiated by the MS.

In the embodiment of the present invention, when the MS initiates in the GSM network cell the service not supported by the GSM network, the BSC can determine the network format capable of supporting the service initiated by the MS, obtain in the neighboring cell corresponding to the determined network format the neighboring cell capable of supporting the service initiated by the MS as the target cell, and switch the service initiated by the MS to the target cell. Therefore, when the MS initiates in the GSM network cell the service not supported by the GSM network, the service initiated by the MS can also be established successfully, thereby improving user experience.

### Embodiment 3

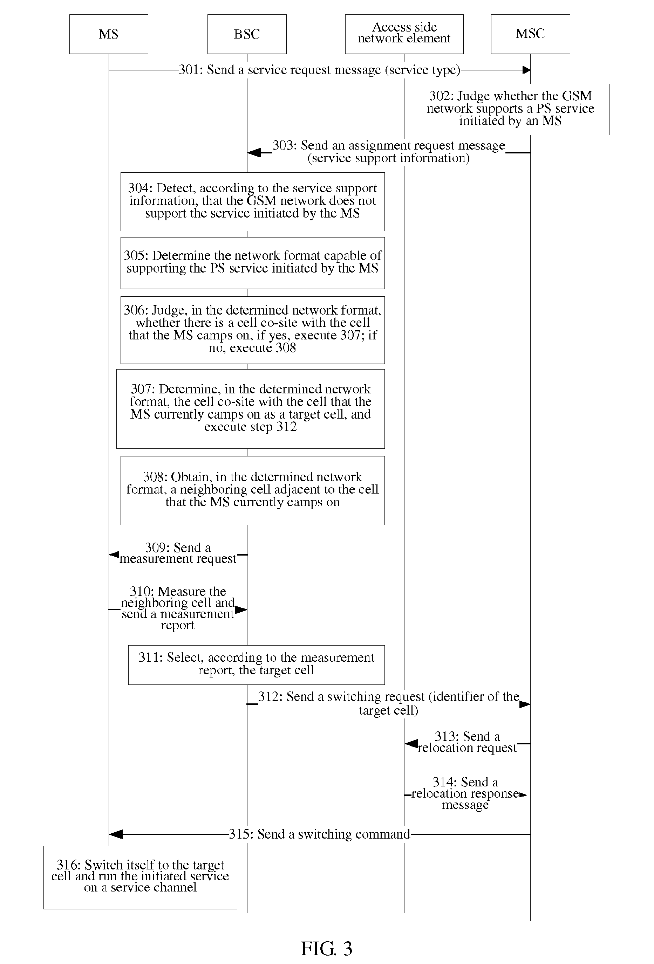

An embodiment of the present invention provides a service establishment method. In the embodiment, a communication network is a network where a GSM network, a UMTS network, and an LTE network are in overlapping coverage, where in the communication network, a GSM network cell is in open state, while a UMTS network cell and an LTE network cell are in closed or part closed state; an MS initiates, in the opened GSM network cell and by means of CS (Circuit Switched, Circuit Switched) domain request, a PS (Packet Switched, Packet Switched) service not supported by the GSM network, and then a BSC utilizes a service establishment method provided in the embodiment to establish the PS service initiated by the MS. Referring to FIG. 3, the method includes:
301: Send, by an MS, when the MS in a GSM network cell that it currently camps on initiates by means of CS domain request a PS service, a service request message to an MSC (Mobile Switching Center, mobile switching center), where the service request message carries a service type of the service initiated by the MS;
where, the MSC is a core network element.

The UMTS network cell and the LTE network cell are closed or part closed, while the GSM network cell is still retained, so the MS can only camp on the currently opened GSM network cell; the GSM network supports the CS service rather than the PS service, so the currently opened GSM network cell does not support the PS service that the MS initiates by means of CS domain request. In addition, the PS service may be a video service.

The service request message may be a layer-3 message.

302: Receive, by the MSC, the service request message, and determine, according to the service type carried by the service request message, whether to send service support information, where the service support information is used to indicate whether the currently opened GSM network supports the PS service initiated by the MS.

Specifically, search a stored service type list to determine whether there is the service type carried by the service request message, if no, set the service support information to indicate that the GSM network does not support the PS service initiated by the MS, and decide to send the set service support information, where the service type list is a list for storing the service type of the service supported by the GSM network;
or,
search the service type list, if it is determined that the service type list does not have the service type carried by the service request message, set the service support information to indicate the service type carried by the service request message, and decide to send the set service support information to the BSC; or
search, according to the service type carried by the service request message and from the mapping relationship between the network format and the service type, for the network format of the service sent by the MS; if the found network format is not the GSM network, set the service support information to indicate the network format that supports the service initiated by the MS, and decide to send the set PS service support information, where the mapping relationship between the network format and the service type is used to store each type of network format and the service type of the service supported by each type of network format.

303: Send, by the MSC, an assignment request message to the BSC, where the assignment request message carries the service support information, and the service support information is used to indicate whether the currently opened GSM network supports the PS service initiated by the MS.

In the embodiment, the MSC adds, in the sent assignment request message, a service support information field; as shown in Table 1, the assignment request message sent by the MSC includes three fields: element identifier (Element identifier), length (Length), and service support information (Service support indication).

**Table 1**

| 8 | 7 | 6 | 5 | 4 | 3 | 2 | 1 | |
|---|---|---|---|---|---|---|---|---|
| | Element identifier | | | | | | | octet 1 |
| | Length | | | | | | | octet 2 |
| | Service support indication | | | | | | | octet 3 |

The service support information may be divided into the following three forms, including:

First, the service support information may occupy 1 bit, for indicating whether the currently opened GSM network supports the service initiated by the MS.

For example, bit 0 may be used to indicate that the currently opened GSM network supports the service initiated by the MS and bit 1 is used to indicate that the currently opened GSM network does not support the service initiated by the MS.

Second, the service support information may occupy a plurality of bits, for indicating network formats that can support the service initiated by the MS.

For example, bit 00 may be used to indicate that all network formats support the service initiated by the MS, 01 is used to indicate that only the LTE network supports the service initiated by the MS, 10 is used to indicate that only the UMTS network supports the service initiated by the MS, and 11 is used to indicate that both the UMTS network and LTE network support the service initiated by the MS.

Third, the service support information may occupy a plurality of bits, for indicating the service type of the service initiated by the MS.

For example, bit 00 may be used to indicate that the service type is voice service, and 01 is used to indicate that the service type is video service.

304: Receive, by the BSC, the assignment request message, and detect, according to the service support information carried by the assignment request message, that the currently opened GSM network does not support the PS service initiated by the MS.

If the service support information is used to indicate whether the currently opened GSM network supports the service initiated by the MS or indicate the network formats that can support the service initiated by the MS, the BSC directly determines, according to the service support information, that the currently opened GSM network does not support the PS service initiated by the MS; if the service support information is used to indicate the service type of the service initiated by the MS, the BSC determines, according to the service support information, the service type of the service initiated by the MS, and then determines, according to the mapping relationship between the stored service type and the network format and the service type of the service initiated by the MS, that the currently opened GSM network does not support the PS service initiated by the MS.

For any service in the embodiment, the mapping relationship between the service type of the service and the network format that supports the service may be stored in the BSC in advance.

305: Determine, by the BSC according to the service support information, the network format capable of supporting the PS service initiated by the MS.

Specifically, if the service support information is used to indicate that the GSM network does not support the PS service initiated by the MS, the BSC selects a network format from other network formats except GSM, and determines the selected network format as the network format that supports the PS service initiated by the MS; or,
if the service support information is used to indicate the network formats that can support the service initiated by the MS, the BSC may determine the network format indicated by the service support information as the network format that supports the PS service initiated by the MS; or,
if the service support information is used to indicate the service type of the service initiated by the MS, obtain, on the basis of the service type indicated by the service support information and from the mapping relationship between the stored service type and the network format, the network format that supports the service initiated by the MS.

If there is a plurality of network formats that support the service initiated by the MS, the BSC selects a network format that optimally supports the service initiated by the MS.

Both the LTE network and UMTS network support the PS service, so in the embodiment, the determined network format may be the LTE network or the UMTS network.

306: Determine, by the BSC, in the neighboring cell corresponding to the determined network format, whether there is a neighboring cell co-site with the GSM network cell that the MS currently camps on, and if yes, execute 307; if no, execute 308.

307: Select, by the BSC, the neighboring cell co-site with the GSM network cell that the MS currently camps on as the target cell, and execute 312.

If the neighboring cell corresponding to the determined network format has a neighboring cell co-site with the GSM network cell that the MS currently camps on, the co-site neighboring cell may serve as the target cell of a switching service. Since the determined network format is in overlapping coverage with the GSM network, if the target cell is co-site with the cell that the MS currently camps on, the MS must be located in the covered range of the target cell, so the PS service initiated by the MS may be switched to the target cell.

If the determined network format is the LTE network, the target cell is the LTE network cell co-site with the GSM network cell that the MS currently camps on; if the determined network format is the UMTS network, the target cell is the UMTS network cell co-site with the GSM network cell that the MS currently camps on.

Further, in order to better make the MS switch the initiated service to the target cell, the BSC, after determining the target cell, may further notify an access side network element that belongs to the target cell to open a common broadcast channel.

If the determined network format is the UMTS network, the access side network element is an RNC; if the determined network format is the LTE network, the access side network element is an eNB.

308: Obtain, by the BSC, in the neighboring cell corresponding to the determined network format, the neighboring cell adjacent to the cell that the MS currently camps on, and notify the access side network element that belongs to the obtained neighboring cell to open the common broadcast channel.

309: Send, by the BSC, a measurement request to the MS, where the measurement request is used to notify the MS to measure the common broadcast channel of the obtained neighboring cell.

310: Receive, by the MS, the measurement request sent by the BSC, measure the common broadcast channel of each neighboring cell obtained by the BSC, obtain a measurement report of each neighboring cell, and send the measurement report of each neighboring cell to the BSC.

311: Receive, by the BSC, the measurement report of each neighboring cell, select, according to the measurement report of each neighboring cell, the neighboring cell, and determine the selected neighboring cell as the target cell.

Further, the BSC may further notify the access side network element that belongs to an unselected neighboring cell to close the common broadcast channel.

Further, since the MS, when initiating a service, will periodically measure the common broadcast channel of the neighboring cell adjacent to the cell that the MS currently camps on, in the embodiment, the BSC in step 308, after notifying the access side network element that belongs to the neighboring cell to open the common broadcast channel, may not send the measurement request to the MS, and instead waits for the measurement report of each neighboring cell that is sent by the MS after periodically measuring the common broadcast channel of each neighboring cell, and then selects the target cell according to the measurement report of each neighboring cell.

312: Send, by the BSC, a switching request to the MSC, where the switching request carries an identifier of the determined target cell.

313: Receive, by the MSC, the switching request sent by the BSC, and send, according to the identifier of the target cell carried by the switching request, a relocation request to the access side network element that belongs to the target cell.

If the target cell is the LTE network cell, the access side network element is an eNB (evolved NodeB, evolved base station), and correspondingly, the MSC sends the relocation request to the eNB that belongs to the target cell; if the target cell is the UMTS network cell, the access side network element is an RNC (Radio Network Controller, radio network controller), and correspondingly, the MSC sends the relocation request to the RNC that belongs to the target cell.

314: Receive, by the access side network element, the relocation request sent by the MSC, allocate a service channel for the MS, and send a relocation response message to the MSC.

315: Receive, by the MSC, the relocation response message, and send a switching command to the MS, where the switching command is used to notify the MS to switch the currently initiated PS service to the allocated service channel.

316: Receive, by the MS, the switching command sent by the MSC, and switch itself to the target cell and run the initiated PS service on the service channel allocated by the access side network element.

The MS, after transmitting the initiated PS service on the service channel allocated by the access side network element, may notify the BSC and re-camp on the GSM network cell, and then the BSC closes the target cell and notifies the access side network element to release the allocated service channel.

In the embodiment, the BSC may also first obtain a neighboring cell co-site with the cell that the MS currently camps on. If the obtained co-site neighboring cell has a cell with its network format supporting the PS service initiated by the MS, determine the cell with its network format supporting the PS service initiated by the MS as the target cell; otherwise, obtain a neighboring cell adjacent to the cell that the MS currently camps on, and select from the obtained neighboring cell a neighboring cell with its network format supporting the PS service initiated by the MS as the target cell.

In the embodiment, the BSC, after determining the network format that supports the PS service initiated by the MS, may obtain, on the basis of the cell that the MS currently camps on and from the mapping relationship between the stored camp-on cell and candidate cell, a corresponding candidate cell, and select, from the obtained candidate cell, a cell that belongs to the determined network format as the target cell.

In the embodiment, if the service support information is used to indicate that the currently opened GSM network does not support the service initiated by the MS, and the BSC in step 305 selects a network format as the network format that supports the service initiated by the MS before executing steps 306 to 316, and if the service initiated by the MS fails to be switched to the target cell, the BSC returns to step 305 to reselect a network format from the remaining network formats for the MS and to continue to execute steps 306 to 316 until successfully switching the service initiated by the MS to the target cell.

In the embodiment of the present invention, when the MS initiates, in the GSM network cell and by means of CS domain request, the PS service not supported by the currently opened GSM network, the BSC can determine the network format capable of supporting the service initiated by the MS, obtain in the neighboring cell corresponding to the determined network format the target cell, and switch the service initiated by the MS to the target cell. In this way, when the MS initiates, in the GSM network cell and by means of CS domain request, the PS service not supported by the currently opened GSM network, the PS service initiated by the MS can be established successfully, thereby improving user experience.

### Embodiment 4

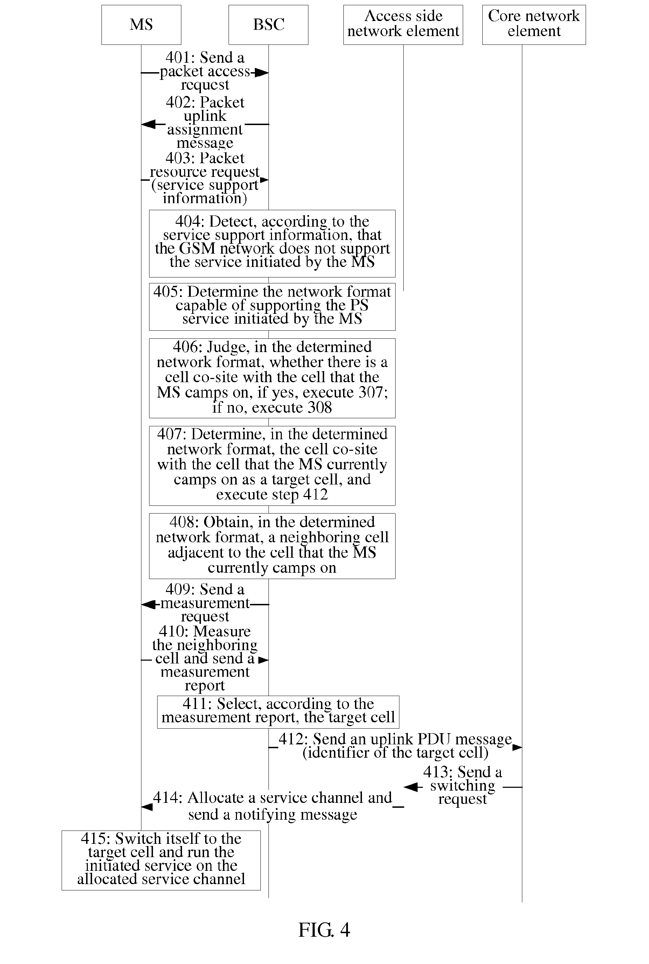

An embodiment of the present invention provides a service establishment method. In the embodiment, a communication network is a network where a GSM network, a UMTS network, and an LTE network are in overlapping coverage, where in the communication network, a GSM network cell is in open state, while a UMTS network cell and an LTE network cell are in closed or part closed state; an MS initiates, in the opened GSM network cell and by means of PS domain request, a PS service not supported by the GSM network, and then a BSC utilizes a service establishment method provided in the embodiment to establish the PS service initiated by the MS. Referring to FIG. 4, the method includes:
401: Send, by an MS, when the MS initiates in a GSM network cell that it currently camps on and by means of PS domain request a PS service, a packet access request to a BSC.
402: Receive, by the BSC, the packet access request sent by the MS, and return a packet uplink assignment message to the MS.

Further, the packet uplink assignment message may further carry capability information for indicating the currently opened GSM network.

In the embodiment, the BSC adds, to the current packet uplink assignment message, a capability information field, and the capability information may be divided into the following forms, including:

First, the capability information is used to indicate which network formats of services the currently opened GSM network supports.

For example, bit 00 may be used to indicate that the currently opened GSM network only supports a service of the GSM network; bit 01 is used to indicate that the currently opened GSM network only supports services of the GSM network and the UMTS network; and 11 is used to indicate that the currently opened GSM network can support services of all network formats.

Second, the capability information is used to indicate which service types of services the currently opened GSM network supports.

For example, 00 may be used to indicate that the currently opened GSM network supports a download service; 01 is used to indicate that the currently opened GSM network supports a video service.

Third, the capability information is used to indicate a service transmission speed supported by the currently opened GSM network.

Correspondingly, the MS may determine, according to the capability information, whether the currently opened GSM network supports the initiated service, and transmits a determination result to application-layer software.

403: Send, by the MS, a packet resource request to the BSC, where the packet resource request carries service support information of the resource needed by the service initiated by the MS.

The resource needed by the service may include a maximum bandwidth needed by the service, a service type of the service and/or a QoS parameter needed by the service.

404: Receive, by the BSC, the packet resource request sent by the MS, and detect, according to the service support information carried by the packet resource request, whether the currently opened GSM network supports the PS service initiated by the MS; if no, executing step 405.

Specifically, the BSC receives the packet resource request sent by the MS, determines, according to the service support information carried by the packet resource request, the resource needed by the service initiated by the MS, and detects, according to the determined resource, that the currently opened GSM network does not support the PS service initiated by the MS.

405: Determine, by the BSC, the network format capable of supporting the service initiated by the MS.

The BSC determines, according to the resource needed by the service initiated by the MS, the network format capable of supporting the service initiated by the MS.

If the service support information is used to indicate the maximum bandwidth needed by the service initiated by the MS, the BSC obtains the network format capable of providing the bandwidth indicated by the service support information, and determines the obtained network format as the network format that supports the service initiated by the MS.

If the service support information is used to indicate the QoS parameter needed by the service initiated by the MS, the BSC obtains the network format capable of providing the QoS parameter indicated by the service support information, and determines the obtained network format as the network format that supports the service initiated by the MS.

If the service support information is used to indicate the service type of the service initiated by the MS, obtain, on the basis of the service type indicated by the service support information and from the mapping relationship between the stored service type and the network format, the network format that supports the service initiated by the MS.

406: Determine, by the BSC, in the neighboring cell corresponding to the determined network format, whether there is a neighboring cell co-site with the GSM network cell that the MS currently camps on, and if yes, execute step 407; if no, execute step 408.

407: Select, by the BSC, the neighboring cell co-site with the GSM network cell that the MS currently camps on, determine the selected neighboring cell as the target cell that supports the PS service initiated by the MS, and then execute step 412.

If the network format determined by the BSC is the LTE network, the target cell selected by the BSC is the LTE network cell co-site with the GSM network cell that the MS currently camps on; if the network format determined by the BSC is the UMTS network, the target cell selected by the BSC is the UMTS network cell co-site with the GSM network cell that the MS currently camps on.

408: Obtain, by the BSC, the neighboring cell adjacent to the GSM cell that the MS currently camps on, and notify an access side network element that belongs to the obtained neighboring cell to open a common broadcast channel.

409: Send, by the BSC, a measurement request to the MS, where the measurement request is used to notify the MS to measure the common broadcast channel of each obtained neighboring cell.

410: Receive, by the MS, the measurement request sent by the BSC, measure the common broadcast channel of each neighboring cell obtained by the BSC, obtain a measurement report of each neighboring cell, and send the measurement report of each neighboring cell to the BSC.

411: Receive, by the BSC, the measurement report of each neighboring cell, select, according to the measurement report of each neighboring cell, the neighboring cell, and determine the selected neighboring cell as the target cell.

Further, the BSC may further notify the access side network element that belongs to an unselected neighboring cell to close the common broadcast channel.

Further, since the MS, when initiating a service, will periodically measure the common broadcast channel of the neighboring cell of the cell that the MS currently camps on, in the embodiment, the BSC in step 408, after notifying the access side network element that belongs to the neighboring cell to open the common broadcast channel, may not send the measurement request to the MS, and instead waits for the measurement report of each neighboring cell that is sent by the MS after periodically measuring the common broadcast channel of each neighboring cell, and then selects the target cell according to the measurement report of each neighboring cell.

412: Send, by the BSC, an uplink PDU (Protocol Data Unit, protocol data unit) message to a core network element, where the uplink PDU message carries a service switching indication for indicating the switching the service initiated by the MS to the target cell and a target cell identifier.

If the target cell is an LTE network cell, the core network element is an SGSN (Servicing GPRS (General Packet Radio Service, general packet radio service) Support Node, servicing GPRS support node), and correspondingly, the BSC sends the uplink PDU message to the SGSN; if the target cell is a UMTS network cell, the core network element is an MME (Mobility Management Entity, mobility management entity), and correspondingly, the BSC sends the uplink PDU message to the MME.

413: Receive, by the core network element, the uplink PDU message sent by the BSC, and send, according to the service switching indication and the target cell identifier carried by the uplink PDU message, a switching request to the access side network element that belongs to the target cell.

If the target cell is an LTE cell, the access side network element is an eNB and the core network element is an SGSN, and correspondingly, the SGSN sends the switching request to the eNB that belongs to the target cell; if the target cell is a UMTS cell, the access side network element is an RNC and the core network element is an MME, and correspondingly, the MME sends the switching request to the RNC that belongs to the target cell.

414: Receive, by the access side network element, the switching request sent by the core network element, allocate a service channel for the MS, and send a notifying message to the MS, where the notifying message is used to notify the MS to access the initiated PS service to the allocated service channel.

415: Receive, by the MS, the notifying message sent by the access side network element, and switch itself to the target cell and run the PS service on the service channel allocated by the access side network element.

In the embodiment, the BSC, after obtaining the target cell, may further directly send a redirection request message to the MS, where the redirection request message carries access information of the target cell; the MS, after receiving the redirection request message sent by the BSC, according to the access information of the target cell carried by the redirection request message, switches itself to the target cell, and executes a wireless resource establishment process with the access side network element that belongs to the target cell, and executes a service establishment process with the core network element; then the MS runs the initiated service in the target cell.

The process of accessing the target cell executed by the MS includes an air interface resource establishment process and a service channel establishment process; the air interface resource establishment process may establish a wireless resource connection between the MS and the access side network element that belongs to the target cell, and the service channel establishment process may establish a service channel connecting the three of the MS, the access side network element that belongs to the target cell, and the core network element.

In the embodiment of the present invention, when the MS initiates, in the GSM network cell and by means of PS domain request, the PS service not supported by the currently opened GSM network, the BSC can determine the network format capable of supporting the service initiated by the MS, obtain in the neighboring cell corresponding to the determined network format the target cell, and switch the service initiated by the MS to the target cell. In this way, when the MS initiates, in the GSM network cell and by means of PS domain request, the PS service not supported by the currently opened GSM network, the PS service initiated by the MS can be established successfully, thereby improving user experience.

### Embodiment 5

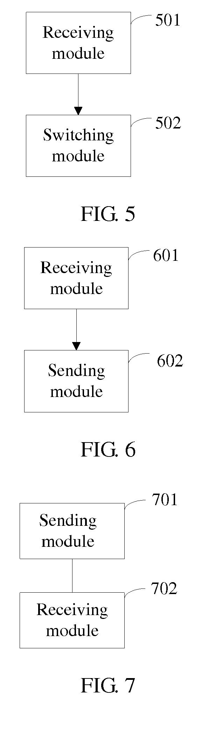

As shown in FIG. 5, an embodiment of the present invention provides a service establishment device, including:
a receiving module 501, configured to receive a service indication message, where the service indication message includes service support information about a service initiated by a terminal; and
a switching module 502, configured to switch, when it is determined on the basis of the service support information that a network format opened by a cell in which the terminal initiates the service does not support the service initiated by the terminal, the service initiated by the terminal to a cell that supports the service initiated by the terminal.

If the service support information indicates a service type of the service initiated by the terminal, the switching module 502 includes:
a determining unit, configured to determine, according to the service type indicated by the service support information and a mapping relationship between the service type and a network format, a network format that supports the service initiated by the terminal; and
a switching unit, configured to switch the service initiated by the terminal to a cell corresponding to the network format that supports the service initiated by the terminal.

The service indication message includes: an assignment request message sent by a core network, or, a packet resource request sent by the terminal.

When the service indication message is the assignment request message sent by the core network,
if the service support information indicates that a current network does not support the service initiated by the terminal, the switching unit is specifically configured to determine the network format that supports the service initiated by the terminal, and switch the service initiated by the terminal to the cell corresponding to the determined network format; or
if the service support information indicates the network format that supports the service initiated by the terminal, the switching unit is specifically configured to switch the service initiated by the terminal to the cell corresponding to the network format indicated by the service support information.

If the network format that supports the service initiated by the terminal has a neighboring cell co-site with the cell that the terminal camps on,

the switching unit is specifically configured to switch the service initiated by the terminal to the cell corresponding to the network format that supports the service initiated by the terminal in the neighboring cell co-site with the cell that the terminal camps on, where the co-site neighboring cell refers to a neighboring cell with its receiver deployed in the same position with a receiver of the cell that the terminal camps on, and with its transmitter also deployed in the same position with a transmitter of the cell that the terminal camps on.

In the embodiment of the present invention, when a mobile station initiates in a cell that it currently camps on a service not supported by a currently opened network format, a target cell with a network format supporting the service initiated by the mobile station is obtained, and the service initiated by the mobile station is switched to the target cell. In this way, when the mobile station initiates in the cell that it currently camps on a service not supported by the currently opened network format, the service initiated by the mobile station can be established successfully, thereby improving user experience.

### Embodiment 6

As shown in FIG. 6, an embodiment of the present invention provides a core network element, including:
a receiving module 601, configured to receive a service request message sent by a terminal, where the service request message includes a type of a service initiated by the terminal; and
a sending module 602, configured to send, according to the type of the service initiated by the terminal, assignment request information to a base station controller, where the assignment request information includes service support information of the service initiated by the terminal, so that the base station controller switches, according to the service support information, the service initiated by the terminal to a cell that supports the service initiated by the terminal.

Execute, when it is determined according to the type of the service that a current cell does not support the service initiated by the terminal, the sending the assignment request information to the base station controller according to the service request message.

The service support information is used to indicate a type of the service initiated by the terminal;
or; the service support information is used to indicate whether the current cell supports the service initiated by the terminal;
or; according to the type of the service initiated by the terminal, a network format that supports the service initiated by the terminal is determined, and the service support information is used to indicate the determined network format that supports the service initiated by the terminal.

In the embodiment of the present invention, the terminal, when initiating in a cell that it currently camps on a service not supported by a currently opened network format, sends service support information of the service initiated by the terminal to a BSC, and the BSC switches the service initiated by the terminal to a target cell. In this way, when the terminal initiates in the cell that it currently camps on the service not supported by the currently opened network format, the service initiated by the terminal can be established successfully, thereby improving user experience.

### Embodiment 7

As shown in FIG. 7, an embodiment of the present invention provides a terminal, including:
a sending module 701, configured to send, when a service is initiated in a GSM network cell by means of PS domain request, a packet resource request carrying a type of the initiated service, so that the BSC switches, according to the type of the service, the initiated service to a cell that supports the initiated service.

In addition, the terminal may further include a receiving module 702, configured to receive, before sending the packet resource request carrying the type of the service to the BSC, capability information about the GSM network cell sent by the BSC, and determine, according to the capability information, whether the GSM network cell supports the initiated service.

In the embodiment of the present invention, a terminal, when initiating in a cell that it currently camps on a service not supported by a currently opened network format, sends service support information of the service initiated by the terminal to a BSC, and the BSC switches the service initiated by the terminal to a target cell. In this way, when the terminal initiates in the cell that it currently camps on the service not supported by the currently opened network format, the service initiated by the terminal can be established successfully, thereby improving user experience.

### Embodiment 8

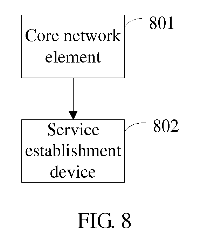

As shown in FIG. 8, an embodiment of the present invention further provides a service establishment system, including a core network element 801 according to Embodiment 7 and a service establishment device 802 according to Embodiment 6.

In the embodiment of the present invention, when a terminal initiates in a cell that it currently camps on a PS service in a currently opened GSM network cell, a target cell with the network format supporting the service initiated by the mobile station is obtained, and the service initiated by the mobile station is switched to the target cell. In this way, when the mobile station initiates in the cell that it currently camps on the service not supported by the currently opened network format, the service initiated by the mobile station can be established successfully, thereby improving user experience.

All or part of the contents in the technical solutions provided in the foregoing embodiments may be implemented by software programming, and the software programs are stored in readable storage media such as hard disk, an optical disk, or a floppy disk of a computer.

The foregoing descriptions are merely exemplary embodiments of the present invention, but are not intended to limit the present invention. Any modification, equivalent replacement, or improvement derived within the spirit and principle of the present invention shall fall within the protection scope of the present invention.

## Claims

1. A service establishment method, comprising:
Receiving a service indication message, wherein the service indication message comprises service support information about a service initiated by a terminal; and
when it is determined on the basis of the service support information that a network format opened by a cell in which the terminal initiates the service does not support the service initiated by the terminal,
switching the service initiated by the terminal to a cell that supports the service initiated by the terminal.

2. The method according to claim 1, wherein
if the service support information indicates a service type of the service initiated by the terminal, the switching the service initiated by the terminal to the cell that supports the service initiated by the terminal comprises:
determining, according to the service type indicated by the service support information and a mapping relationship between the service type and a network format, a network format that supports the service initiated by the terminal, and switching the service initiated by the terminal to a cell corresponding to the network format.

3. The method according to claim 2, wherein
the service indication message comprises: an assignment request message sent by a core network, or, a packet resource request sent by the terminal.

4. The method according to claim 3, wherein
when the service indication message is the assignment request message sent by the core network,
if the service support information indicates that a current network does not support the service initiated by the terminal, the switching the service initiated by the terminal to the cell that supports the service initiated by the terminal is specifically:
determining the network format that supports the service initiated by the terminal, and switching the service initiated by the terminal to the cell corresponding to the determined network format; or
if the service support information indicates the network format that supports the service initiated by the terminal, the switching the service initiated by the terminal to the cell that supports the service initiated by the terminal is specifically:
switching the service initiated by the terminal to a cell corresponding to the network format indicated by the service support information.

5. The method according to any one of claims 1 to 4, wherein if the network format has a neighboring cell co-site with a cell that the terminal camps on, the switching the service initiated by the terminal to the cell of the network format comprises:
switching the service initiated by the terminal to the cell corresponding to the network format in the neighboring cell co-site with the cell that the terminal camps on, wherein the co-site neighboring cell refers to a neighboring cell with its receiver deployed in the same position with a receiver of the cell that the terminal camps on, and with its transmitter also deployed in the same position with a transmitter of the cell that the terminal camps on.

6. A service establishment method, comprising:
receiving a service request message sent by a terminal, the service request message comprises a type of a service initiated by the terminal; and
sending, according to the type of the service initiated by the terminal, assignment request information to a base station controller, wherein the assignment request information comprises service support information of the service initiated by the terminal, so that the base station controller switches, according to the service support information, the service initiated by the terminal to a cell that supports the service initiated by the terminal.

7. The method according to claim 6, comprising:
executing, when it is determined according to the type of the service that a current cell does not support the service initiated by the terminal, the sending the assignment request information to the base station controller according to the service request message.

8. The method according to claim 6, wherein
the service support information is used to indicate the type of the service initiated by the terminal;
or; the service support information is used to indicate whether a current cell supports the service initiated by the terminal;
or; according to the type of the service initiated by the terminal, a network format that supports the service initiated by the terminal is determined, and the service support information is used to indicate the determined network format that supports the service initiated by the terminal.

9. A service establishment method, comprising:
sending, when initiating a service in a Global System for Mobile Communications GSM network cell by means of packet switched PS domain request, a packet resource request carrying a type of the service to a base station controller BSC, so that the BSC switches, according to the type of the service, the service to a cell that supports the service.

10. The service establishment method according to claim 9, wherein before the sending the packet resource request carrying the type of the service to the BSC, the method further comprises:
receiving capability information about the GSM network cell sent by the BSC, and determining on the basis of the capability information whether the GSM network cell supports the initiated service.

11. A service establishment device, comprising:
a receiving module, configured to receive a service indication message, wherein the service indication message comprises service support information about a service initiated by a terminal; and
a switching module, configured to switch, when it is determined on the basis of the service support information that a network format opened by a cell in which the terminal initiates the service does not support the service initiated by the terminal, the service initiated by the terminal to a cell that supports the service initiated by the terminal.

12. The device according to claim 11, wherein
if the service support information indicates a service type of the service initiated by the terminal, the switching module comprises:
a determining unit, configured to determine, according to the service type indicated by the service support information and a mapping relationship between the service type and a network format, a network format that supports the service initiated by the terminal; and
a switching unit, configured to switch the service initiated by the terminal to a cell corresponding to the network format.

13. The device according to claim 11, wherein
when the service indication message is an assignment request message sent by a core network,
if the service support information indicates that a current network does not support the service initiated by the terminal, the switching unit is specifically configured to determine a network format that supports the service initiated by the terminal, and switch the service initiated by the terminal to a cell corresponding to the determined network format; or
if the service support information indicates a network format that supports the service initiated by the terminal, the switching unit is specifically configured to switch the service initiated by the terminal to a cell corresponding to the network format indicated by the service support information.

14. The device according to any one of claims 11 to 13, wherein if the network format has a neighboring cell co-site with the cell that the terminal camps on,
the switching unit is specifically configured to switch the service initiated by the terminal to the cell corresponding to the network format in the neighboring cell co-site with the cell that the terminal camps on, wherein the co-site neighboring cell refers to a neighboring cell with its receiver deployed in the same position with a receiver of the cell that the terminal camps on, and with its transmitter also deployed in the same position with a transmitter of the cell that the terminal camps on.

15. A core network element, comprising:
a receiving module, configured to receive a service request message sent by a terminal, wherein the service request message comprises a type of a service initiated by the terminal; and
a sending module, configured to send, according to the type of the service initiated by the terminal, assignment request information to a base station controller, wherein the assignment request information comprises service support information of the service initiated by the terminal, so that the base station controller switches, according to the service support information, the service initiated by the terminal to a cell that supports the service initiated by the terminal.

16. The core network element according to claim 15, wherein
the sending module executes, when it is determined according to the type of the service that a current cell does not support the service initiated by the terminal, the sending the assignment request information to the base station controller according to the service request message.

17. A terminal, comprising:
a sending module, configured to send, when a service is initiated in a Global System for Mobile Communications GSM network cell by means of packet switched PS domain request, a packet resource request carrying a type of the service to a base station controller BSC, so that the BSC switches, according to the type of the service, the service to a cell that supports the service.

18. The terminal according to claim 17, further comprising:
a receiving module, configured to receive, before the packet resource request carrying the type of the service is sent to the BSC, capability information about the GSM network cell sent by the BSC, and determine, according to the capability information, whether the GSM network cell supports the initiated service.

19. A service establishment system, comprising the core network element according to any one of claims 11 to 14 and the service establishment device according to any one of claims 15 to 16.
